# EUROPEAN PATENT APPLICATION

(11) **EP 0 727 193 A1**
(43) Date of publication of application: **21.08.1996**
(21) Application number: 96102385.0
(22) Date of filing: 16.02.1996
(51) Int. Cl.: A61C 9/00, A61C 8/00

(54) **Universal precision dental transfer for endosseous implants**

(30) Priority: 17.02.1995 US 390724
(71) Applicant: DENTSPLY INTERNATIONAL, INC., York Pennsylvania 17405 (US)
(72) Inventor: Balfour, Alan R., Camarillo, California 93012 (US)
(74) Representative: Wächtershäuser, Günter, Prof. Dr.

(57) **Abstract**

Disclosed is a dental device that precisely transfers the location and axial orientation of one or more dental implants in the oral cavity by impression to a laboratory model. The device is a three component assembly of a transfer cuff, a locating sleeve, and a retaining screw that secures to an implant in the mouth. The cuff and locating sleeve engages the anti-rotational feature of the implant. After an impression material has completely surrounded the device secured to an implant, the retaining screw is unscrewed and the internal locating sleeve retracted to such that the connection with the implant anti-rotational feature is disengaged. The impression is then removed from the mouth, retaining the transfer cuff therein, precisely located and accessible for making a stone model thereof for a restoration construct for securing to the implant. The universal transfer device and impression method of the invention precisely transfer locations of multiple implants and their anti-rotational features, even where the implants are not in parallel axial alignment.

## Description

### BACKGROUND OF THE INVENTION

The invention relates to endosseous implants and associated devices for making restorations to be secured thereto. More particularly, the invention relates to devices for transferring relative locations and axial orientations of multiple implants that may not be in parallel alignment into impressions and models such that precise dental restorations result.

Presently, there are several dental implant location and orientation transferring systems and methods in the marketplace. The primary methods are known as direct and indirect transfer systems. The indirect transfer method retains the transfer components in the mouth fixed to the implant after an impression is taken. The transfer components are then detached from their implants, removed from the mouth and extra-orally reinserted into the cavities created in the impression material. The impression is then used for preparing a laboratory model which leads to preparation of the restorative construct, as is well known and conventionally done. A drawback of this method is that human error is introduced into the restoration through the inaccuracy inherent in reinserting the transfer components into the impression material prior to pouring of the laboratory model.

A direct impression transfer method was devised to combat the indirect method's potential for error propagation. The direct transfer method retains transfer device components embedded in the impression material when the impression is removed from the mouth. Since key transfer device components are never separated from the impression material a significant potential for human error is substantially decreased.

Of these direct implant transfer system devices and methods available, several can directly transfer the location of both the implant and orientation of its anti-rotational feature, which is typically an internal bore or external projection having a hexagonal cross-section. However, all of the known devices remain engaged to the anti-rotational feature of the typical implant just prior to separation of the impression from the patient's mouth. Separation requires a substantially vertical force to be exerted with respect to the implant anti-rotational feature in order to disengage the transfer elements from the implant. When there is more than one implant and the implants are not aligned axially in parallel, which is a typical situation for multiple implants for many reasons, there will be an axial draw or binding between the implants' anti-rotational features and it will be extremely difficult to remove the impression from the patient's mouth. This limitation has confined direct transfer devices and methods to transferring one implant location at a time.

It is desirable to overcome the present deficiencies of prior art transfer devices and methods by providing a device and method that allow precise multiple implant location transfers into impressions and laboratory models that are independent of implant anti-rotational elements and any non-parallel axial orientations of the implants.

It is also an object of the invention to provide transfer components that are adaptable to a variety of useful designs and sizes for attachment to a wide variety of available implants.

### SUMMARY OF THE INVENTION

The invention is a universal dental implant transfer device for acquiring and transferring the radial location of single or multiple implants. In addition, the device is capable of directly transferring multiple implant locations including their anti-rotational features and axial orientations, even where the implants are not in parallel axial alignment.

The device of the invention incorporates: (1) a transfer cuff that attaches to each implant to be in an impression; (2) a removable locating sleeve, that fits inside the cuff and locks the location of the anti-rotational feature of the implant into register with a similar anti-rotational feature in the direct transfer cuff; and (3) a retaining screw that secures the cuff and sleeve to the implant during taking of an impression. After making the impression in the mouth, the retaining screw and the locating sleeve are removed from the impression. Thus, the locating sleeve element which spans the cuff and implant anti-rotational features during the impression process is retracted or removed, sufficiently to disengage the connection between the transfer cuff and the implant. The impression, including the direct transfer cuff embedded therein, may then be easily removed.

The dental implant device of the invention for transferring location and axial orientation of one or more dental implants into an impression material for use in making dental restorations for attachment to said implants, said implants of having an internal or external anti-rotational means and an internally threaded central bore, comprises, as noted above, a transfer cuff, locating sleeve and a retaining screw. The transfer cuff, which may be in the form of a coping or abutment or other desired functional shape, includes an axial bore including an internal anti-rotational means that substantially exactly matches that of said implant or at least one surface thereof such that when the cuff is secured to the implant, the anti-rotational feature of the implant is in register with that of the cuff. The cuff also includes external mechanical surfaces for resisting movement in said impression material.

The locating sleeve that is fitted into the central bore of said cuff, has a positioning shoulder that is received by a cuff seating surface. Where the dental implant includes internal anti-rotational means, for example in the form of a bore having a hexagonal cross-section, the sleeve distal end includes an external anti-rotational means that extends in register with and through said cuff internal anti-rotational means into and in register with the internal anti-rotational means of said implant, spanning both internal anti-rotational means. Where the dental implant includes an external anti-rotational means, said sleeve distal end includes an internal anti-rotational means that extends in register with and through said cuff in to engagement with the external anti-rotational feature of the implant. A surface of said internal anti-rotational means of the locating sleeve is removed such that an implant surface engages the transfer cuff sufficiently to fix said cuff into anti-rotational alignment with the implant. For example, where the implant includes, as an anti-rotational means, a projection having typically a hexagonal cross-section, the transfer cuff will include a surface for engaging a hexagonal side of the implant and said sleeve will have a surface removed such that upon attachment to the implant, the implant anti-rotational surface will be in register with and contact with the transfer cuff surface.

The retaining screw component of the device of the invention has at its distal end, external threads that register with the internal threads of the implant internal bore, said screw of such diameter to pass through said sleeve and cuff. The screw engages surfaces of the locating sleeve such that, when said screw threads are engaged into the implant internally threaded bore, the device is secured to said implant.

The invention further comprises a method for making a dental impression that accurately transfers the location and axial alignment of a dental implant in a patient's oral cavity into said impression and then to a stone casting for making a dental restoration for attachment to said implant, said implant including unthreaded anti-rotational surfaces and threaded bore portions. The method comprises:
(a) securing to said implant a dental device of the invention comprising,
   (i) a transfer cuff axially bored having at least an internal anti-rotational surface that is substantially identical to and in register with said implant anti-rotational surfaces,
   (ii) a locating sleeve that includes anti-rotational surfaces that simultaneously engage both implant and cuff surfaces such that said cuff and implant anti-rotational means are fixed in register, and
   (iii) a retaining screw that includes a distal externally threaded portion that engages the central axial threaded bore of the implant and has surfaces that bear on said sleeve and cuff, whereby the device is securely held together in non-rotational alignment by said tightened screw on said implant;
(b) applying an impression material to a patient's tooth and gum surfaces in which said implant is fixed, including to said dental device such that the retaining screw of such implant device is exposable;
(c) loosening, after said impression material has set, said implant retaining screw from said implant whereby the anti-rotational means of the transfer cuff and implant are disengaged; and
(d) separating said impression from patient surfaces whereby said transfer cuff remains securely positioned in said impression material.

The method is particularly useful wherein the impression includes more than one implant, said implants having non-parallel axial orientation, comprising:
applying an impression material that includes a plurality of said implants, including said dental devices secured thereto;
loosening the retaining screw in each implant in the impression sufficiently such that the locating sleeve is retractable to disengage anti-rotational means in register between said locating cuff and implant; and
separating said impression from said patient.

### BRIEF DESCRIPTION OF THE DRAWINGS

- Figure 1: is a partial sectional view of a typical implant of the prior art with which the dental device of the invention may be used.
- Figure 2: is a partial sectional elevational view of the device of the invention assembled for attachment to an implant similar to Figure 1.
- Figure 3: is an end view of the transfer cuff of the invention.
- Figure 4: is an exploded elevational assembly view in partial section, of the Universal Precision Transfer Dental Device of the invention for use with an implant having an internal anti-rotational means.
- Figure 5: is an exploded elevational assembly view in partial section, of the universal precision transfer dental device of the invention for use with an implant having an external anti-rotational means.
- Figure 6: is an end view of the transfer cuff component shown in figure 5.
- Figure 7: is a partial sectional elevational view of the device of the invention assembled for attachment to an implant having an external hexagonal anti-rotational projection.

### DETAILED DESCRIPTION OF PREFERRED EMBODIMENTS

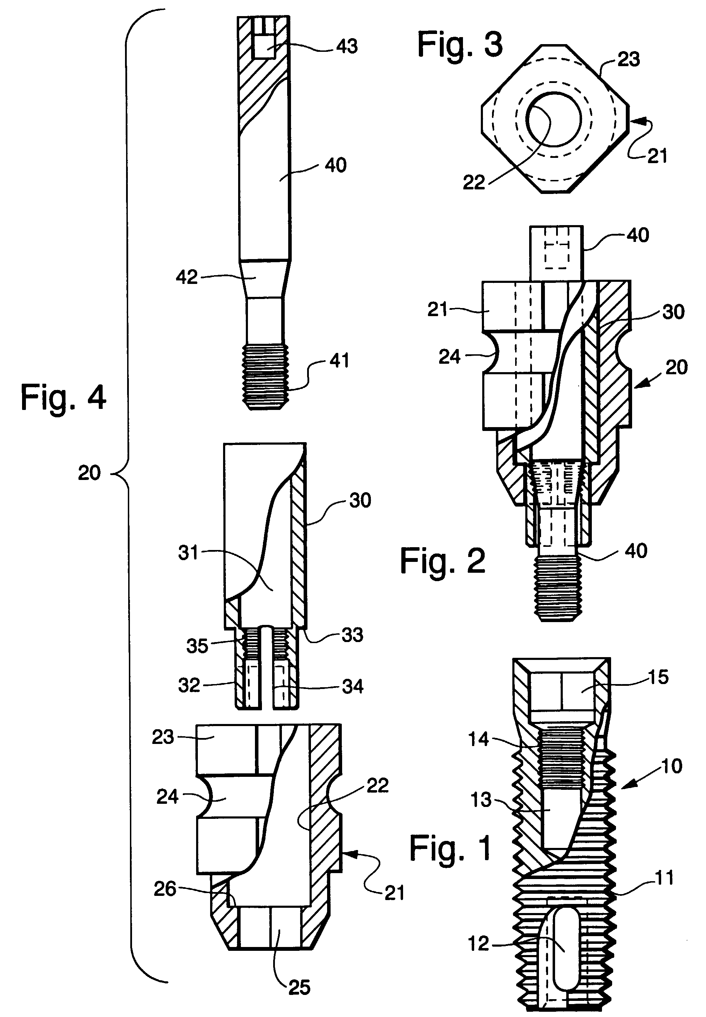

Referring to Figure 1, a conventional dental implant 10 comprises an elongated cylinder having external threads 11 for threading into bone tissue to receive the implant. The distal end of the implant 10 includes openings and penetrations 12 to permit bone tissue to grow into it for securing the implant in place. The implant 10 typically includes an axial bore 13 having an internally thread portion 14 and a non-threaded anti-rotational surfaces portion 15 for securing a restoration superstructures or the like in a non-rotational configuration. The typical implant 10 is constructed of commercially-pure titanium and alloys, generally having an outside thread diameter of not less than about 3 mm, wherein the implant has a length of about 5 to 20 mm.

Referring now to Figures 2-4, the universal precision transfer dental device 20 is shown. Referring to Figure 4, the universal direct transfer dental device 20 includes three components: a transfer cuff 21; a locating sleeve 30; and a retaining screw 40. In Figure 2, the device 20 is shown assembled for attachment to, for example, an implant 10 as shown in Figure 1.

Referring to Figures 3 and 4, the transfer cuff 21 is generally cylindrical in shape and includes an axial bore 22. The transfer cuff 21 is designed to remain fixed in the impression material during the direct transfer procedure and may be constructed in a number of desired cuff sizes or diameters to match various implant structures and the alike. The cuff includes mechanical retaining features to prevent the cuff once embedded in the impression material from shifting position. As shown in Figure 3, the generally cylindrical shape may include surface portions, for example milled flat surfaces 23, such that a generally rectangular or square cross-section portion is provided. In addition, the cuff is preferably provided with at least one circumferential groove 24 to provide a second mechanical retaining feature of the cuff. A principal feature of the cuff is an anti-rotational element 25 that is hexagonal in cross-section and formed in the cuff distal end. The anti-rotational feature 25 is substantially identical and registerable with the anti-rotational internal hexagonal surfaces 15 of implant 10. The axial bore 22 of the cuff 21 is counterbored to form a seating surface 26 adjacent to the anti-rotational hexagon 25.

Referring to Figures 2 and 4, the locating sleeve 30 is generally cylindrical in shape, provided with an axial bore 31. The distal end of the locating sleeve is provided with external surfaces 32 that substantially duplicate the internal anti-rotational surfaces 25 of the cuff 21 and the anti-rotational feature 15 of implant 10. The dimensions of the anti-rotational feature 32 are such that when the sleeve is inserted in the cuff, bearing surfaces 33 milled into the locating sleeve contact the cuff seating surfaces 26, and the external anti-rotational surfaces 32 extend through the anti-rotational surfaces 25 of the cuff into the anti-rotational surfaces 15 of implant 10, spanning and joining the two anti-rotational surfaces 25, 15. The locating sleeve 30 is further provided with a slot 34 longitudinally cut through the wall of the sleeve surfaces. Additionally, the internal bore surfaces adjacent to the anti-rotational feature 32 are provided with internal threads 35 that are substantially identical to the threads 14 of the implant 10. The axial bore 31 and threads 35 are dimensioned such that the retaining screw 40 will pass through the locating sleeve 30, threading through threads 35 into contact with implant 10.

The retaining screw 40 is substantially cylindrical in shape and of sufficient length to extend through the cuff and sleeve assembly into locking contact with the implant 10. The screw 40 is provided with external threads 41 that are substantially identical to those of the sleeve internal threads 35 and the internal threads 14 of the implant 10. The retaining screw 40 is provided with a tapered section 42 and a internal slot 43, typically a hexagon in cross-section, for driving the screw into secure contact with the implant.

In operation, the assembled device 20 of the invention, as shown in Figure 2, includes the sleeve 30 seated in the cuff 21 with the retaining screw 40 threaded therethrough. The device 20 is then contacted with the implant 10 such that the external anti-rotational feature 32 engages and seats in the anti-rotational feature 15 of the implant 10. The retaining screw is then advanced such that its threads 41 thread into implant threads 14 and the device is tightened securely to the implant 10. As the retaining screw nears its secured position, the tapered surfaces 42 of the retaining screw 40 engage the interior surfaces of the locating sleeve 30 and, in cooperation with slot 34, cause the anti-rotational surfaces 32 to deflect slightly outwards, further locking the transfer cuff 21 and implant 10 together. This feature significantly improves the accuracy of positioning and transferring of implant locations to improve the resulting restoration.

In taking an impression where there are multiple implant supports that are to be a part of the restoration, an individual transfer device 20 of the invention is fixed and secured to each implant. Impression material is then placed in the mouth in contact with the implants and their secured transfer devices 20. The impression is made such that the retaining screws 40 are assessable, after an impression tray holding the impression material is removed or the molding process completed. After the impression material has hardened, the retaining screw 40 for each implant is loosened to disengage the retaining screw threads 41 from the implant threads 14. The screw is retracted sufficiently to be free of the implant and, if desired, may engage the internal threads 35 of the locating sleeve 30. A vertical force is then applied to each retaining screw 40 at each implant to disengage the locating sleeve's anti-rotational feature 32 from the implant anti-rotational surface 15, thereby separating the connection or bridge between the anti-rotational feature 25 of the cuff 21 and the anti-rotational feature 15 of the implant. The impression is then removed from the patient's mouth with the transfer cuffs remaining embedded in the impression material. Since the anti-rotational connection and interlock between the transfer cuff 21 and the implant 10 are disengaged, the impression is easily removable, even where there are multiple implants and they are not in parallel axial alignment.

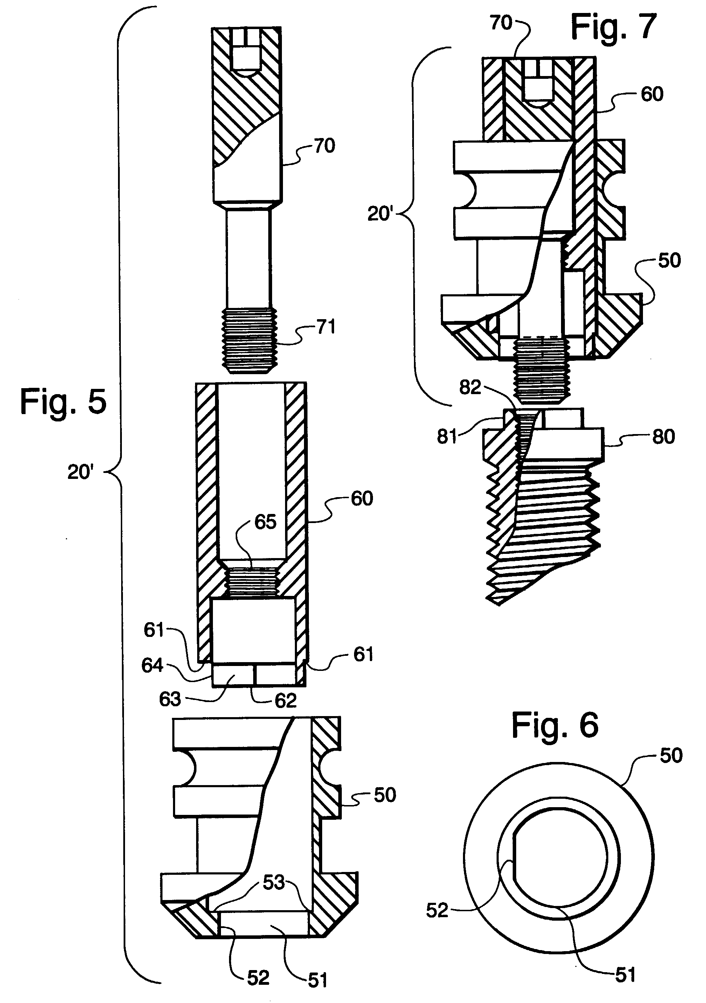

Referring to figures 5-7, an alternative embodiment 20' of the invention is shown that is particularly suitable for use with an implant 80 (Figure 7) that includes as an anti-rotational feature, a projection 81, typically hexagonal in cross-section.

The universal dental implant transfer device 20' is substantially similar in its components and function as described above with respect to the device for attachment onto an implant having an internal anti-rotational feature. Thus, the device 20' includes as shown in Figure 5 a transfer cuff 50, a locating sleeve 60 and a retaining screw 70, differing only in those portions of the components that engage the external anti-rotational feature 81 of the implant 80, as herein below described.

Referring to Figures 5 and 6, the transfer cuff 50 is axially bored to receive the locating sleeve 60, cuff seating surfaces 53 retaining said locating sleeve 60 therein, by engaging the sleeve bearing surfaces 61. The transfer cuff 50 is provided with a distal end bore 51 that is shaped to match that of the distal end 62 of the locating sleeve 60. The boring 51 includes at least one anti-rotational surface 52 which is registerable with a corresponding surface on the anti-rotational feature 81 of the implant, wherein, engagement of said surface 52 with the corresponding external surface of the implant 80 locks the cuff 70 in anti-rotational alignment with the implant.

Referring to Figure 5 and 7, the locating sleeve 60 at distal end 62 is provided with an internal boring 63 that in cross-section is substantially identical to the external anti-rotational surfaces 81 of the implant 80, such that the surfaces 63 fit over and engage the external anti-rotational feature 81 of the implant. A portion of the wall at the distal end 62 of the locating sleeve 60 is removed forming a milled edge or surface 64 to correspond with and accommodate the anti-rotational surface 52 of the transfer cuff 50.

In operation, the device 20' is assembled as described above wherein the assembly attaches to the implant with the locating sleeve surface 63 engaging the external anti-rotational feature of the implant, except at the milled edge 64. The locating sleeve retaining surfaces 61 engage the seating surface 53 of the transfer cuff 50, said sleeve 60 rotated to advance through opening 51, wherein the surface 52 of the transfer cuff coincides with the missing locating sleeve wall portion at edge 64. Upon mounting the device 20' onto the implant, the external anti-rotational feature surfaces 52 of the transfer cuff engage portions of the implant anti-rotational feature 81. The balance of the anti-rotational feature 81 of the implant is engaged by the surfaces 63 of the locating sleeve 60.

The retaining screw 70 is advanced into securing contact with the internal threaded bore (not shown) of the implant 80, securely holding the device 20' to the implant 80 with both the transfer cuff 50 and locating sleeve 60 engaging the anti-rotational feature 81 of the implant. The implant device 20' is then ready for impression taking as described above.

After the impression material is hardened, the retaining screw 70 is loosened and a vertical force exerted thereon sufficient to extract the locating sleeve 60 and surfaces 63 from engagement with the implant external anti-rotational surfaces 81. The impression may then be removed easily, independently of multiple implants, even where they are not in parallel axial alignment.

## Claims

1. A dental implant device for transferring location and axial orientation of one or more dental implants into an impression material for use in making dental restorations for attachment to said implants, each of said implants having an anti-rotational means and an internally threaded central bore, comprising:
(a) a transfer cuff having a central bore and an internal anti-rotational means that substantially exactly matches at least one anti-rotational surface of said implant, said cuff including external mechanical surface means for resisting movement in said impression material;
(b) a locating sleeve that is fitted into the central bore of said cuff, retained by cuff bore surfaces, said sleeve distal end having anti-rotational means that extend in register with and through said cuff in register with the anti-rotational means of said implant, said sleeve including an axial bore; and
(c) a retaining screw having at its distal end, external threads that register with the internal threads of the implant internal central bore, said screw of such diameter that passes through the external bores of and engaging said sleeve and cuff, wherein said screw threads engaging the implant internally threaded bore secures said device to said implant, wherein anti-rotational surfaces of both cuff and sleeve are fixed in register with the anti-rotational surfaces of said implant and its axial orientation.

2. The dental implant device of claim 1 wherein implant includes an external anti-rotational means.

3. The dental implant device of claim 2 wherein said external anti-rotational means comprises an axial projection from said implant that is substantially hexagonal in cross-section.

4. The dental implant device of claim 3 wherein said transfer cuff comprises a distal end bore to receive the distal end of said locating sleeve, said bore including at least one anti-rotational surface that is registerable with a corresponding surface on the anti-rotational feature of the implant, said locating sleeve distal end including an internal bore that is substantially identical to the external anti-rotational feature of said implant, the external surfaces of the distal end engagable with the transfer cuff bore, extending therethrough for engagement with said implant, said internal surfaces having at least one surface removed such that the cuff and sleeve assembled both engage said anti-rotational feature of such implant when said retaining screw secures the assembled device to said implant.

5. A dental implant device for transferring location and axial orientation of one or more dental implants into an impression material for use in making dental restorations for attachment to said implants, said implants having an anti-rotational means and an internally threaded central bore, comprising:
(a) a transfer cuff having a central bore and an internal anti-rotational means that substantially exactly matches at least one anti-rotational surface of said implant, said cuff including external mechanical surface means for resisting movement in said impression material;
(b) a locating sleeve that is fitted into the central bore of said cuff, retained by cuff bore surfaces, said sleeve distal end having anti-rotational means that extend in register with and through said cuff into and in register with the anti-rotational means of said implant, said sleeve including an axial bore; and
(c) a retaining screw having at its distal end, external threads that register with the internal threads of the implant internal central bore, said screw of such diameter to pass through and engaging said sleeve and cuff, wherein said screw threads engaged into the implant internally threaded bore secures said device to said implant, wherein anti-rotational surfaces of both cuff and sleeve are fixed in register with the anti-rotational surfaces of said implant and its axial orientation.

6. The device of claim 5 wherein:
said locating sleeve distal end having external anti-rotational means is slotted longitudinally such that said longitudinal surfaces are radially displaceable; and
said retaining screw comprises a tapered relief portion located such that when the device is fixed to the implant the split means is displaced outwardly by the tapering portion as the screw is advanced, tightly locking the external anti-rotational means into the internal anti-rotational means of the implant.

7. The device of claim 5 wherein said locating sleeve includes internal threads adjacent to said abutment seating surfaces, whereupon withdrawal of the screw engages the distal threads of the screw with the sleeve internal threads, providing an aid to withdrawal of the sleeve and screw from the cuff by applying, while the implant and cuff are no longer locked together at the anti-rotational means, an axial pulling force.

8. The device of claim 5 wherein said anti-rotational means are substantially hexagonal in cross-section.

9. The dental device of claim 5 wherein the cuff external mechanical surface means comprise an external shape having substantially flat and lateral surfaces and at least one longitudinal circumferential groove.

10. The device of claim 5 wherein the retaining screw includes, at its end opposite said distal threads, a slot or hex bore for driving said device into said implant.

11. A dental device for transferring the location of an implant into an impression material, said implants having an central axial bore, including non-threaded anti-rotational surface means and a threaded axial bore portion, comprising:
(a) a transfer cuff axially bored having internal anti-rotational means surfaces that are substantially identical to and in register with said implant anti-rotational surfaces;
(b) a locating sleeve that includes anti-rotational surfaces that simultaneously engage and span, both the implant and cuff anti-rotational means surfaces; and
(c) a retaining screw that includes a distal externally threaded portion that engages the central axial threaded bore of the implant and has surfaces that bear on said sleeve and cuff, whereby the device is securely held together in non-rotational alignment by said tightened screw on to said implant.

12. A method for making a dental impression that accurately transfers the location and axial alignment of a dental implant in a patient's oral cavity into said impression and then to a stone casting for making a dental restoration for attachment to said implant, said implant including an internal central axial bore having unthreaded internal anti-rotational surfaces and threaded bore portions, comprising:
(a) securing to said implant a dental device comprising,
(i) a transfer cuff axially bored having internal anti-rotational means surfaces that are substantially identical to and in register with said implant anti-rotational surfaces,
(ii) a locating sleeve that includes anti-rotational surfaces that simultaneously engage and span, both the implant and cuff anti-rotational mean surfaces, and
(iii) a retaining screw that includes a distal externally threaded portion that engages the central axial threaded bore of the implant and has surfaces that bear on said sleeve and cuff, whereby the device is securely held together in non-rotational alignment by said tightened screw on said implant;
(b) applying an impression material to a patient's tooth and gum surfaces in which said implant is fixed, including to said dental device such that the retaining screw of such implant device is exposable;
(c) removing said implant retaining screw and locating sleeve from said implant whereby the anti-rotational means between the transfer cuff and implant is disengaged; and
(d) separating said impression from patient surfaces whereby said transfer cuff remains securely positioned in said impression material.

13. The method of claim 12 wherein the impression includes more than one implant, said implants having non-parallel axial orientation, comprising:
applying an impression material that includes a plurality of said implants, including said dental devices;
removing from each implant in the impression said retaining screw and locating sleeve to disengage said anti-rotational means between said locating cuff and implant; and
separating said impression from said patient.

14. The dental implant device of claim 1 wherein said transfer cuff is in the form of a coping or abutment for attachment to said implant.
